# EUROPEAN PATENT SPECIFICATION

(11) **EP 3 144 952 B1**
(45) Date of publication and mention of the grant of the patent: **28.03.2018**
(21) Application number: 15185207.6
(22) Date of filing: 15.09.2015
(51) Int. Cl.: H01H 71/08, H02B 1/052

(54) **ASSEMBLY DEVICE, CIRCUIT BREAKER SYSTEM AND METHOD FOR IMPROVING FIXING A MOLDED CASE CIRCUIT BREAKER TO A BUS BAR**
MONTAGEVORRICHTUNG, SCHUTZSCHALTERSYSTEM UND VERFAHREN ZUR VERBESSERUNG DER BEFESTIGUNG EINES LEISTUNGSSCHALTERS MIT GEGOSSENEM GEHÄUSE AN EINER STROMSCHIENE
DISPOSITIF D'ASSEMBLAGE, SYSTÈME ET PROCÉDÉ DE DISJONCTEUR POUR AMÉLIORER LA FIXATION D'UN DISJONCTEUR À BOÎTIER MOULÉ À UNE BARRE OMNIBUS

(43) Date of publication of application: 22.03.2017
(73) Proprietor: Siemens Aktiengesellschaft, 80333 München (DE)
(72) Inventor: Kalous, Lukas, 56152 Vermerovice (CZ); Mrtvy, Pavel, 75002 Prerov (CZ)

(56) References cited:
- EP-A1- 0 327 385
- EP-A1- 2 849 201
- EP-A1- 2 851 926
- DE-B3-102004 017 393
- DE-T2- 3 877 379
- US-A- 5 811 749

## Description

The invention relates to an assembly device for improving fixing a molded case circuit breaker to a bus bar. Further, the invention relates to a circuit breaker system, comprising a molded case circuit breaker an assembly device, as well as to a method for mounting a molded case circuit breaker to a bus bar.

It is known that molded case circuit breakers (MCCB) are mounted into electric control cabinets by attaching the MCCB to a bus bar that is fixed within an interior of the electric control cabinet, e.g. at a back wall of the electric control cabinet. For securing the MCCB at the bus bar, often fixation screws are used, since they provide a secure fixation of the MCCB at the bus bar and are easy to remove in case the MCCB is broken and has to be replaced.

For many applications and due to cost efficiency reasons, electric control cabinet space is rare. Therefore, MCCBs with small outer dimensions and compact connection means have been developed. For saving space, screw holes for fixation screws have been moved from a side to an inside of the MCCBs. Standard MCCBs have a plurality of screw holes, especially three, aligned side by side for fixing the MCCBs to the bus bar. However, for a fixation procedure it is hard to locate all screws at a correct place at the MCCB or keeping them in position before screwing them into the bus bar. Since the screw hole is inside the MCCB, it is hardly possible and sometimes even impossible to hold the screws with external screw holding means, such as forceps, in position. As a result, e.g. during positioning the screws at the MCCB, one or more screws can fall off the MCCB and fall into the electric control cabinet. These screws may even block subsequent assembly at the bus bar. In that case, the screw must be removed and a new screw has to be located at the MCCB. This overall procedure is quite time and cost intensive. EP 2 849 201 A1,

EP 2 851 926 A1 and DE 10 2004 017 393 B3 disclose different assembly devices for securing a fixation screw to a bar. The disassembly of the assembly device with the fixation screw in a fixed state is complicated. Moreover, disassembly of the assembly device requires a lot of space.

Therefore, it is an object of the present invention to provide a solution that does not have the above-mentioned deficiencies. It is especially an object of the present invention to provide an assembly device for improving fixing a molded case circuit breaker to a bus bar, a circuit breaker system and a method for mounting a molded case circuit breaker to a bus bar that allow a more efficient time reduced and cost reduced assembly of a molded case circuit breaker to a bus bar.

The object of the present invention is achieved by the claims. In particular, the object is achieved by a circuit breaker system according to claim 1 and a method for mounting a molded case circuit breaker to a bus bar according to claim 7. Further aspects and embodiments of the present invention are addressed in the dependent claims. According to the invention, the object is achieved by a circuit breaker system, comprising a molded case circuit breaker with a housing, at least one cavity for receiving the assembly device and at least a screw hole for fixing the molded case circuit breaker to a bus bar with a fixation screw and an assembly device. The housing of the molded case circuit breaker has a cavity for receiving the assembly device, preferably in a way that the assembly device is fixed, more preferred temporarily fixed, to the circuit breaker. It is preferred that in each cavity a screw hole is located.

Preferably, the cavity of the housing of the molded case circuit breaker has the shape of a rim, wherein the assembly device is mountable within the rim in a way that the assembly device is releasably fixed at the circuit breaker. A rim has the advantage, that the assembly device can be slid into the housing of the circuit breaker, while being guided by side walls of the rim. Thus, assembly of the assembly device to the molded case circuit breaker is improved.

According to the invention, the assembly device comprises a screw head holding means for holding a screw head of the fixation screw. Furthermore, the assembly device is configured for being arranged inside a cavity of the housing of the molded case circuit breaker in a way that a screw head of a fixation screw that is arranged at the screw hole for mounting the molded case circuit breaker to the bus bar can engage with the screw head holding means in an engagement direction.

An assembly device in terms of the invention is an auxiliary means with the main function to support an assembly procedure of the circuit breaker, such as a SIEMENS 3VA, 3VT or 3VL circuit breaker, to the bus bar. It is within the scope of the present invention that the assembly device is an external device that can be mounted to a circuit breaker, e.g. a standard molded case circuit breaker. Alternatively, the assembly device could be an integral part of the circuit breaker, as long as an assembly of a fixation screw to the molded case circuit breaker is not blocked by the assembly device.

The screw head holding means is configured for holding a screw head, especially by a frictional connection, e.g. by surrounding the screw head. Preferably, the screw head holding means is configured for engaging the screw head of an Allen screw that has a cylindrical shape. This has the advantage that the screw can be relatively rotated to the assembly device without impeding an engagement of the assembly device with the screw head. A screw head holding means has the advantage that a fixation screw can be held securely at the assembly device. Therefore, it is preferred that the screw head of the fixation screw can be engaged and held by the assembly device. However, in addition or alternatively to the screw head, it is within the scope of the invention, that the screw head holding means is configured for engaging and holding another part of the screw such as a shaft or a thread.

The assembly device can be mounted inside a cavity of the housing of the circuit breaker. It is preferred that, when mounted to the circuit breaker, the assembly device is fixed to the housing e.g. by frictional connection or form fit. The assembly device is further configured that, in that position, the screw head holder is aligned with a screw hole of the housing. Consequently, when a fixation screw is inserted through the screw hole, a screw head of the fixation screw is aligned with the screw head holding means. This has the advantage that the screw head of the fixation screw can be easily engaged with the screw head fixation means. Preferably, the screw hole has an inner diameter that is larger than an outer diameter of the fixation screw in order to allow easy inserting a shaft of the fixation screw into the screw hole without an engagement of the thread of the fixation screw with the screw hole.

Preferably, the assembly device, especially the screw head holding means, is a plastic part. It is also preferred that the assembly device, especially the screw head holding means, comprises flexible material. This has the advantages, that the screw head holding means can be elastically deformed due to engaging with the screw head and thereby generating a holding force against the screw head.

The assembly device has the advantage that a fixation screw can be temporarily fixed to the housing of the molded case circuit breaker easily and safely via the assembly device. Especially when more fixation screws have to be arranged at the circuit breaker, this is an advantage because without the assembly device of the invention, it is hardly possible to keep a plurality of fixation screws positioned at the molded case circuit breaker during the assembly procedure. With the assembly device, the plurality of screws is temporarily fixable to the housing of the circuit breaker. Consequently, unwanted falling-off of the fixation screws is hardly possible. By these means, assembly time as well as costs can be reduced significantly.

It is preferred that the screw head holding means is configured such that the engagement direction is parallel to a longitudinal axis of the fixation screw. This means e.g. that a center axis of the screw head holding means is coaxial or basically coaxial with a center axis, respectively longitudinal axis, of the fixation screw. This has the advantage that engaging the screw head with the screw head fixation means is improved.

In a preferred embodiment of the invention, the screw head holding means has an inner reception that is configured for receiving and holding the screw head. The reception can be configured for engaging the screw head from an outside direction, e.g. an outer surface of the screw head that is facing away from the central axis of the fixation screw, or an inside direction, e.g. a recess of a Phillips screw. A reception has the advantage that holding of the screw head, especially of an Allen screw, is improved.

Preferably, the reception has an opening for receiving the screw head and at least a stop element for preventing the screw head from being pushed through the reception in engagement direction. The screw head holding means can e.g. have a circumferential wall surrounding the reception. Alternatively, the screw head holding means comprises a plurality of fingers spaced apart from each other and surrounding the reception. Preferably, the reception can be elastically widened, e.g. fingers can be elastically bent, due to the engagement with the screw head. By these means, a holding force can be generated for securing the screw head at the reception. The stop element is configured for preventing a movement of the screw head through the assembly device. The stop element is further configured for allowing access to the screw head from one side along the central axis with a tool, e.g. a screw driver, for tightening or loosening the fixation screw. A stop element has the advantage that the screw head cannot pass the screw head holder in one direction and, therefore, a holding of the fixation screw at the assembly device is improved.

It is preferred that the assembly device comprises three equally spaced screw head holding means that are arranged in a way that the assembly device is mountable at the housing of a molded case circuit breaker with three respective, equally spaced screw holes, wherein each of the three screw head holding means is alignable with a screw hole of the housing for receiving a screw head of a fixation screw that is extending through the screw hole. This assembly device is suitable for standard molded case circuit breaker with three screw holes. This feature has the advantage that all three fixation screws that are needed for fixing the molded case circuit breaker to the bus bar can be held in position by one assembly device. Furthermore, the fixation of the assembly device at the circuit breaker is improved due to an increase of surfaces of the assembly device and the molded case circuit breaker that are in frictional contact.

According to the invention, the object is achieved by a method for mounting a molded case circuit breaker to a bus bar. The method comprising the steps of:
- providing a molded case circuit breaker system according to the invention;
- putting a shaft of a fixation screw through a screw hole of a housing of the circuit breaker;
- arranging an assembly device of the circuit breaker system at the housing in a way that a screw head holding means of the assembly device is aligned with a screw head of the screw;
- moving the screw head into a reception of the screw head holding means until the screw head is releasably fixed within the screw head holding means;
- arranging the circuit breaker at a mounting location at the bus bar; and
- fixing the fixation screw and thereby fixing the molded case circuit breaker to the bus bar.

Preferably, a washer is arranged at the shaft of the fixation screw between the screw head and the screw hole. In case a plurality of fixation screws has to be secured at a plurality of screw holes of the circuit breaker, a single assembly device can be arranged at the housing at each screw hole. Alternatively, an assembly device can be used that is configured for being arranged at more than one screw holes at the same time.

It can be advantageous that the assembly device remains arranged at the molded case circuit breaker after the molded case circuit breaker has been fixed to the bus bar, because when the molded case circuit breaker has to be removed, the fixation screws will engage with the assembly device again and are thereby secured from falling off. By these means, it can be prevented that a fixation screw unintentionally falls into an electric control cabinet.

The method for mounting a molded case circuit breaker to a bus bar has the same advantages over the state of the art as the assembly device according to the invention.

It is preferred that the assembly device is removed after the fixation screw is partly or fully engaged with a threaded portion of the bus bar. This has the advantage, that one assembly device can be reused for fixing further molded case circuit breaker to a bus bar.

Preferably, the screw head is moved into the reception of the screw head holder by pushing the screw in engagement direction. Preferably, the engagement direction is a direction parallel to the central axis of the screw. This has the advantage that engaging the screw head with the screw head holder can be achieved easily, e.g. by hand.

In the following, the assembly device, circuit breaker system and method for mounting a molded case circuit breaker to a bus bar according to the invention are further explained by means of preferred embodiments. In the following, the same parts show the same reference numerals. In the drawings:
- Figure 1: schematically shows in a perspective view of a first assembly step for arranging a screw at a circuit breaker;
- Figure 2: schematically shows in a perspective view a second assembly step for arranging a screw at a circuit breaker;
- Figure 3: schematically shows in a perspective view a third assembly step for arranging a screw at a circuit breaker; and
- Figure 4: schematically shows in a side view a preferred embodiment of a part of a preferred embodiment of a circuit breaker system.

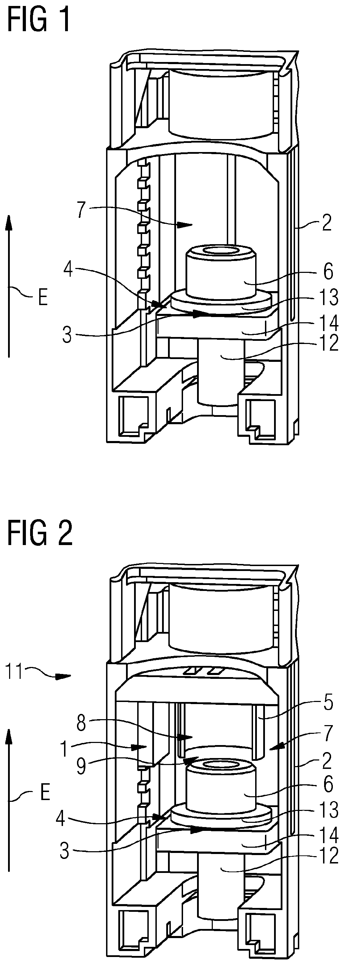

In Fig. 1, a part of a housing 2 of a molded case circuit breaker is schematically shown in a perspective view. In a cavity 7 of the housing 2, a fixation screw 4 is arranged. A shaft 12 of the fixation screw 4 is protruding through a screw hole 3 of a holding plate 14 of the housing 2. A washer 13 is sandwiched at the screw hole 12 between the holding plate 14 and a screw head 6 of the fixation screw 4. In this state, the fixation screw 4 is fully inserted in the screw hole 12.

In Fig. 2, the part of the housing 2 of the molded case circuit breaker of Fig. 1 is schematically shown in a perspective view, wherein an assembly device 1 is arranged within the cavity 7 above the screw head 6. Consequently, Fig. 2 shows a part of the circuit breaker system 11 according to the invention. The assembly device 1 comprises a screw head holding means 5 with a reception 8 for receiving and temporarily holding the screw head 6. For this purpose, the screw head 6 is insertable into the reception 8 in an engagement direction E that is parallel to a longitudinal axis of the fixation screw 4 through an opening 9. In this state, the screw head 6 is not engaged with the assembly device 1.

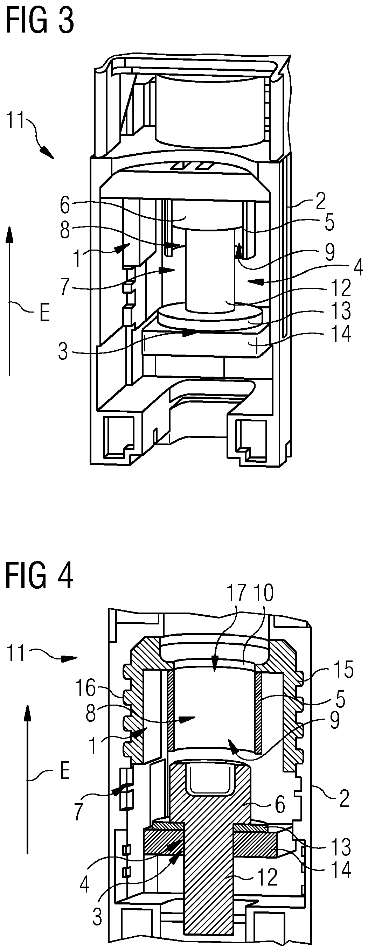

In Fig. 3, part of the circuit breaker system 11 of Fig. 2 is shown in a perspective view, wherein the fixation screw 4 is in a different position and is not fully inserted into the screw hole 3. In this position, the screw head 6 is fully arranged inside the reception 8 of the screw head holding means 5 and thus engaged with the screw head holding means 5. The washer 13 is still secured at the shaft 12 between the holding plate 14 and the screw head 6 because a part of the shaft 12 still protrudes through the screw hole 3. In this state, the fixation screw 4 is temporarily secured at the housing 2 of the circuit breaker system 11 against falling off unintentionally.

Fig. 4 shows a part of a preferred embodiment of a circuit breaker system 11 according to the invention in a sectional side view. The assembly device 1 has a plurality of protrusions 15 that are inserted into respective clearances 16 of the housing 2. The protrusions 15 and clearances 16 are configured such that the assembly device 1 is linearly guided at the housing 2. Alternatively or additionally, the assembly device 1 could be secured at the housing 2 by not shown clicking means. The assembly device 1 further comprises a stop element 10 that is arranged at a side of the reception 8 that is opposite to the opening 9. By means of the stop element 10, the screw head 6 can only be moved in and out of the reception 8 of the side of the opening 9. The stop element 10 has a central bore 17 for allowing a tool, such as a screw driver or Allen key, to engage with a respective portion of the screw head 6 in order to fasten or unfasten the fixation screw 4. In the stat shown in Fig. 4, the assembly device 1 can be removed from the housing 2. Alternatively, the screw head 6 can be moved inside the reception 8 through the opening 9 until the screw head 6 engages the stop element 10.

### Reference number list

- 1: assembly device
- 2: housing
- 3: screw hole
- 4: fixation screw
- 5: screw head holding means
- 6: screw head
- 7: cavity
- 8: reception
- 9: opening
- 10: stop element
- 11: circuit breaker system
- 12: shaft
- 13: washer
- 14: holding plate
- 15: protrusion
- 16: clearance
- 17: central bore

- E: engagement direction

## Claims

1. Circuit breaker system (11), comprising a molded case circuit breaker with a housing (2), at least a screw hole (3) for fixing the molded case circuit breaker to a bus bar with a fixation screw (4) and at least one cavity (7) for receiving an assembly device (1) for improving fixing the molded case circuit breaker to the bus bar, wherein the assembly device (1) comprises a screw head holding means (5) for holding a screw head (6) of the fixation screw (4), wherein the assembly device (1) is configured for being arranged inside a cavity (7) of the housing (2) of the molded case circuit breaker in a way that a screw head (6) of the fixation screw (4) that is arranged at the screw hole (3) for mounting the molded case circuit breaker to the bus bar can engage with the screw head holding means (5) in an engagement direction (E),
**characterized in that**
the screw head (6) is not engaged with the assembly device (1) when the fixation screw (4) is fully inserted in the screw hole (3).

2. Circuit breaker system (11) according to claim 1,
**characterized in that**
the screw head holding means (5) is configured such that the engagement direction (E) is parallel to a longitudinal axis (L) of the fixation screw (4).

3. Circuit breaker system (11) according to claim 1 or 2,
**characterized in that**
the screw head holding means (5) has an inner reception (8) that is configured for receiving and holding the screw head (6) .

4. Circuit breaker system (11) according to claim 3,
**characterized in that**
the reception (8) has an opening (9) for receiving the screw head (6) and at least a stop element (10) for preventing the screw head (6) from being pushed through the reception (8) in engagement direction (E).

5. Circuit breaker system (11) according to any of the previous claims,
**characterized in that**
the assembly device (1) comprises three equally spaced screw head holding means (5) that are arranged in a way that the assembly device (1) is mountable at the housing (2) of a molded case circuit breaker with three respective, equally spaced screw holes (3), wherein each of the three screw head holding means (5) is alignable with a screw hole (3) of the housing (2) for receiving a screw head (6) of a fixation screw (4) that is extending through the screw hole (3).

6. Circuit breaker system according (11) to any of the previous claims,
**characterized in that**
the cavity (7) of the housing (2) of the molded case circuit breaker has the shape of a rim, wherein the assembly device (1) is mountable within the rim in a way that the assembly device (1) is releasably fixed at the circuit breaker.

7. Method for mounting a molded case circuit breaker to a bus bar, the method comprising the steps of:
- providing a molded case circuit breaker system (11) according to any of the previous claims;
- putting a shaft (12) of a fixation screw (4) through a screw hole (3) of a housing (2) of the circuit breaker;
- arranging an assembly device (1) of the circuit breaker system (11) at the housing (2) in a way that a screw head holding means (5) of the assembly device (5) is aligned with a screw head (6) of the screw (4);
- moving the screw head (6) into a reception (8) of the screw head holding means (5) until the screw head (6) is releasably fixed within the screw head holding means (5);
- arranging the molded case circuit breaker at a mounting location at the bus bar; and
- fixing the fixation screw (4) and thereby fixing the molded case circuit breaker to the bus bar.

8. Method according to claim 7,
**characterized in that**
the assembly device (1) is removed after the fixation screw (4) is partly or fully engaged with a threaded portion of the bus bar.

9. Method according to claim 7 or 8,
**characterized in that**
the screw head (6) is moved into the reception (8) by pushing.

## Patentansprüche

1. Leistungsschaltersystem (11), das einen Kompaktleistungsschalter mit einem Gehäuse (2), zumindest einem Schraubenloch (3) zum Befestigen des Kompaktleistungsschalters mit einer Befestigungsschraube (4) an einer Stromschiene und mindestens einem Hohlraum (7) zum Aufnehmen einer Montagevorrichtung (1) zum Verbessern des Befestigens des Kompaktleistungsschalters an der Stromschiene umfasst,
wobei
die Montagevorrichtung (1) ein Schraubenkopfhaltemittel (5) zum Halten eines Schraubenkopfs (6) der Befestigungsschraube (4) umfasst, wobei die Montagevorrichtung (1) für ein derartiges Anordnen in einem Hohlraum (7) des Gehäuses (2) des Kompaktleistungsschalters ausgelegt ist, dass ein Schraubenkopf (6) der Befestigungsschraube (4), der zum Anbringen des Kompaktleistungsschalters an der Stromschiene an dem Schraubenloch (3) angeordnet ist, in Eingriffsrichtung (E) in das Schraubenkopfhaltemittel (5) eingreifen kann,
**dadurch gekennzeichnet, dass**
der Schraubenkopf (6) nicht in die Montagevorrichtung (1) eingreift, wenn die Befestigungsschraube (4) vollständig in das Schraubenloch (3) eingeführt ist.

2. Leistungsschaltersystem (11) nach Anspruch 1,
**dadurch gekennzeichnet, dass**
das Schraubenkopfhaltemittel (5) so ausgelegt ist, dass die Eingriffsrichtung (E) parallel zu einer Längsachse (L) der Befestigungsschraube (4) verläuft.

3. Leistungsschaltersystem (11) nach Anspruch 1 oder 2,
**dadurch gekennzeichnet, dass**
das Schraubenkopfhaltemittel (5) eine Innenaufnahme (8) aufweist, die zum Aufnehmen und Halten des Schraubenkopfs (6) ausgelegt ist.

4. Leistungsschaltersystem (11) nach Anspruch 3,
**dadurch gekennzeichnet, dass**
die Aufnahme (8) eine Öffnung (9) zum Aufnehmen des Schraubenkopfs (6) und zumindest ein Anschlagelement (10) aufweist, welches verhindert, dass der Schraubenkopf (6) in Eingriffsrichtung (E) durch die Aufnahme (8) hindurchgedrückt wird.

5. Leistungsschaltersystem (11) nach einem der vorhergehenden Ansprüche,
**dadurch gekennzeichnet, dass**
die Montagevorrichtung (1) drei gleichmäßig beabstandete Schraubenkopfhaltemittel (5) umfasst, die so angeordnet sind, dass sich die Montagevorrichtung (1) an dem Gehäuse (2) eines Kompaktleistungsschalters mit drei entsprechenden, gleichmäßig beabstandeten Schraubenlöchern (3) anbringen lässt, wobei sich jedes der drei Schraubenkopfhaltemittel (5) zum Aufnehmen eines Schraubenkopfs (6) einer durch das Schraubenloch (3) verlaufenden Befestigungsschraube (4) auf ein Schraubenloch (3) des Gehäuses (2) ausrichten lässt.

6. Leistungsschaltersystem (11) nach einem der vorhergehenden Ansprüche,
**dadurch gekennzeichnet, dass**
der Hohlraum (7) des Gehäuses (2) des Kompaktleistungsschalters die Form eines Kranzes aufweist, wobei sich die Montagevorrichtung (1) derart in dem Kranz anbringen lässt, dass sie lösbar an dem Leistungsschalter befestigt ist.

7. Verfahren zum Anbringen eines Kompaktleistungsschalters an einer Stromschiene, das folgende Schritte umfasst:
- Bereitstellen eines Kompaktleistungsschaltersystems (11) nach einem der vorhergehenden Ansprüche,
- Hindurchführen eines Schafts (12) einer Befestigungsschraube (4) durch ein Schraubenloch (3) eines Gehäuses (2) des Leistungsschalters,
- derartiges Anordnen einer Montagevorrichtung (1) des Leistungsschaltersystems (11) an dem Gehäuse (2), dass ein Schraubenkopfhaltemittel (5) der Montagevorrichtung (5) auf einen Schraubenkopf (6) der Schraube (4) ausgerichtet ist,
- Bewegen des Schraubenkopfs (6) in eine Aufnahme (8) des Schraubenkopfhaltemittels (5), bis er lösbar in dem Schraubenkopfhaltemittel (5) befestigt ist,
- Anordnen des Kompaktleistungsschalters an einer Anbringstelle an der Stromschiene und
- Befestigen der Befestigungsschraube (4) und dadurch des Kompaktleistungsschalters an der Stromschiene.

8. Verfahren nach Anspruch 7,
**dadurch gekennzeichnet, dass**
die Montagevorrichtung (1) entfernt wird, wenn die Befestigungsschraube (4) teilweise oder vollständig mit einem mit Gewinde versehenen Abschnitt der Stromschiene in Eingriff steht.

9. Verfahren nach Anspruch 7 oder 8,
**dadurch gekennzeichnet, dass**
der Schraubenkopf (6) durch Drücken in die Aufnahme (8) bewegt wird.

## Revendications

1. Système de disjoncteur (11), comprenant un disjoncteur à boîtier moulé avec un logement (2), au moins un trou de vis (3) destiné à fixer le disjoncteur à boîtier moulé à une barre omnibus avec une vis de fixation (4) et au moins une cavité (7) destinée à recevoir un dispositif d'assemblage (1) destiné à améliorer la fixation du disjoncteur à boîtier moulé à la barre omnibus, dans lequel le dispositif d'assemblage (1) comprend un moyen de retenue de tête de vis (5) destiné à retenir une tête de vis (6) de la vis de fixation (4), dans lequel le dispositif d'assemblage (1) est configuré pour être agencé à l'intérieur d'une cavité (7) du logement (2) du disjoncteur à boîtier moulé de manière à ce qu'une tête de vis (6) de la vis de fixation (4) qui est agencée au niveau du trou de vis (3) destiné à monter le disjoncteur à boîtier moulé sur la barre omnibus puisse se mettre en prise avec le moyen de retenue de tête de vis (5) dans une direction de mise en prise (E), **caractérisé en ce que** la tête de vis (6) n'est pas mise en prise avec le dispositif d'assemblage (1) lorsque la vis de fixation (4) est insérée entièrement dans le trou de vis (3).

2. Système de disjoncteur (11) selon la revendication 1,
**caractérisé en ce que**
le moyen de retenue de tête de vis (5) est configuré de telle sorte que la direction de mise en prise (E) est parallèle à un axe longitudinal (L) de la vis de fixation (4).

3. Système de disjoncteur (11) selon la revendication 1 ou 2,
**caractérisé en ce que**
le moyen de retenue de tête de vis (5) a une réception interne (8) qui est configurée pour recevoir et retenir la tête de vis (6) .

4. Système de disjoncteur (11) selon la revendication 3,
**caractérisé en ce que**
la réception (8) a une ouverture (9) destinée à recevoir la tête de vis (6) et au moins un élément d'arrêt (10) destiné à empêcher la tête de vis (6) d'être poussée à travers la réception (8) dans la direction de mise en prise (E).

5. Système de disjoncteur (11) selon l'une quelconque des revendications précédentes,
**caractérisé en ce que**
le dispositif d'assemblage (1) comprend trois moyens de retenue de tête de vis équidistants (5) qui sont agencés de manière à ce que le dispositif d'assemblage (1) puisse être monté au niveau du logement (2) d'un disjoncteur à boîtier moulé avec trois trous de vis équidistants respectifs (3), dans lequel chacun des trois moyens de retenue de tête de vis (5) peut être aligné avec un trou de vis (3) du logement (2) destiné à recevoir une tête de vis (6) d'une vis de fixation (4) qui s'étend à travers le trou de vis (3).

6. Système de disjoncteur (11) selon l'une quelconque des revendications précédentes,
**caractérisé en ce que**
la cavité (7) du logement (2) du disjoncteur à boîtier moulé a la forme d'une couronne, dans lequel le dispositif d'assemblage (1) peut être monté à l'intérieur de la couronne de manière à ce que le dispositif d'assemblage (1) soit fixé de manière amovible au niveau du disjoncteur.

7. Procédé destiné au montage d'un disjoncteur à boîtier moulé sur une barre omnibus, le procédé comprenant les étapes consistant à :
- prévoir un système de disjoncteur à boîtier moulé (11) selon l'une quelconque des revendications précédentes ;
- mettre une tige (12) d'une vis de fixation (4) à travers un trou de vis (3) d'un logement (2) du disjoncteur ;
- agencer un dispositif d'assemblage (1) du système de disjoncteur (11) au niveau du logement (2) de manière à ce qu'un moyen de retenue de tête de vis (5) du dispositif d'assemblage (5) soit aligné avec une tête de vis (6) de la vis (4) ;
- amener la tête de vis (6) dans une réception (8) du moyen de retenue de tête de vis (5) jusqu'à ce que la tête de vis (6) soit fixée de manière amovible à l'intérieur du moyen de retenue de tête de vis (5) ;
- agencer le disjoncteur à boîtier moulé au niveau d'un emplacement de montage au niveau de la barre omnibus ; et
- fixer la vis de fixation (4) et ainsi fixer le disjoncteur à boîtier moulé à la barre omnibus.

8. Procédé selon la revendication 7,
**caractérisé en ce que**
le dispositif d'assemblage (1) est enlevé après que la vis de fixation (4) a été mise en prise partiellement ou entièrement avec une partie filetée de la barre omnibus.

9. Procédé selon la revendication 7 ou 8,
**caractérisé en ce que**
la tête de vis (6) est amenée dans la réception (8) par une poussée.
